# EUROPÄISCHE PATENTSCHRIFT

(11) **EP 4 407 466 B1**
(45) Veröffentlichungstag und Bekanntmachung des Hinweises auf die Patenterteilung: **12.03.2025**
(21) Anmeldenummer: 22197283.9
(22) Anmeldetag: 23.09.2022
(51) Int. Cl.: G06F 11/26, G06F 11/34, G06F 11/16, G05B 19/05

(54) **VERFAHREN UND SYSTEM ZUM TEST WENIGSTENS EINES ELEKTRONISCHEN STEUERGERÄTS ALS VIRTUELLES STEUERGERÄT AUF EINEM SIMULATOR UND ENTSPRECHENDER SIMULATOR**
METHOD AND SYSTEM FOR TESTING AT LEAST ONE ELECTRONIC CONTROL UNIT AS A VIRTUAL CONTROL UNIT ON A SIMULATOR AND CORRESPONDING SIMULATOR
PROCÉDÉ ET SYSTÈME DE TEST D'AU MOINS UN APPAREIL DE COMMANDE ÉLECTRONIQUE EN TANT QUE CONTRÔLEUR VIRTUEL SUR UN SIMULATEUR ET SIMULATEUR CORRESPONDANT

(43) Veröffentlichungstag der Anmeldung: 31.07.2024
(73) Patentinhaber: dSPACE GmbH, 33102 Paderborn (DE)
(72) Erfinder: Engel, Felix, 33102 Paderborn (DE); Hildebrand, Andre, 33102 Paderborn (DE)

(56) Entgegenhaltungen:
- EP-A1- 3 285 165
- DE-A1- 102013 212 839
- US-A1- 2013 103 379
- US-A1- 2014 088 946

## Beschreibung

Die Erfindung betrifft ein Verfahren zum Test wenigstens eines elektronischen Steuergeräts als virtuelles Steuergerät auf einem Simulator mit wenigstens einer Simulatorrecheneinheit, wobei das elektronische Steuergerät eine Hardwarekonfiguration mit wenigstens einer Recheneinheit und einer Externschnittstelle zum Austausch von Daten und eine der Hardwarekonfiguration zugeordnete Softwarekonfiguration aufweist, wobei die Softwarekonfiguration eine Internfunktionalität und eine Externschnittstellenfunktionalität umfasst, wobei das elektronische Steuergerät auf das virtuelle Steuergerät abgebildet wird, indem die Internfunktionalität der Softwarekonfiguration des elektronischen Steuergeräts als Internfunktionalität einer Softwarekonfiguration des virtuellen Steuergeräts übernommen wird und indem die Externschnittstellenfunktionalität des elektronischen Steuergerätes ersetzt wird durch eine Datentransferfunktionalität der Softwarekonfiguration der Simulatorrecheneinheit, wobei die Softwarekonfiguration des virtuellen Steuergeräts in ausführbaren Code für die Simulatorrecheneinheit übersetzt und auf dem Simulator ausgeführt wird. Ferner betrifft die Erfindung ein System zum Test wenigstens eines elektronischen Steuergeräts als virtuelles Steuergerät auf einem Simulator, wobei das System den Simulator sowie eine Hardwarekonfiguration und eine der Hardwarekonfiguration zugeordnete Softwarekonfiguration des elektronischen Steuergeräts umfasst, wobei der Simulator wenigstens eine Simulatorrecheneinheit umfasst, wobei die Hardwarekonfiguration des elektronischen Steuergeräts wenigstens eine Recheneinheit und eine Externschnittstelle zum Austausch von Daten umfasst, wobei die Softwarekonfiguration eine Internfunktionalität und eine Externschnittstellenfunktionalität umfasst, wobei durch den Simulator das elektronische Steuergerät auf das virtuelle Steuergerät abgebildet wird, indem die Internfunktionalität der Softwarekonfiguration des elektronischen Steuergeräts als Internfunktionalität einer Softwarekonfiguration des virtuellen Steuergeräts übernommen wird und indem die Externschnittstellenfunktionalität des elektronischen Steuergerätes ersetzt wird durch eine Datentransferfunktionalität einer Softwarekonfiguration der Simulatorrecheneinheit, wobei die Softwarekonfiguration des virtuellen Steuergeräts in ausführbaren Code für die Simulatorrecheneinheit übersetzt und im Betriebszustand des Simulators auf dem Simulator ausgeführt wird. Darüber hinaus betrifft die Erfindung auch einen entsprechenden Simulator und ein diesbezügliches Computerprogramm.

Verfahren und Systeme der vorbeschriebenen Art werden im Bereich der Steuergeräteentwicklung eingesetzt, genauer im Bereich der Entwicklung und des Tests von Software für Steuergeräte. Bei Steuergeräten handelt es sich um Kleinrechner mit einer Externschnittstelle, wobei das Steuergerät über diese Externschnittstelle mit einem technisch-physikalischen Prozess in Wirkverbindung und/oder auch mit anderen Steuergeräten in Kommunikationsverbindung steht; über die Externschnittstelle können also aus der Sicht des Steuergeräts in Sende- und Empfangsrichtung Daten ausgetauscht werden. Bei der Externschnittstelle kann es sich um eine sehr einfache Prozessschnittstelle handeln, um ausschließlich Messdaten auszutauschen, wie beispielsweise eine analoge Stromschnittstelle oder eine digitale PWM-Schnittstelle, es kann sich aber auch um eine fortgeschrittene Kommunikationsschnittstelle handeln, die beispielsweise ein (Feld-)Bus Protokoll implementiert (z. B. CAN, TTP, FlexRay, Ethernet). Die Externschnittstelle kann eine Mehrzahl der genannten Schnittstellenfunktionalitäten aufweisen. Der Betrieb der Externschnittstelle der Hardwarekonfiguration geschieht softwaremäßig durch die Externschnittstellenfunktionalität der Softwarekonfiguration des Steuergeräts.

Von der Recheneinheit des Steuergeräts werden empfangene Signale bzw. Nachrichten aufbereitet, analysiert, zum Beispiel durch einen regelungstechnischen Algorithmus weiterverarbeitet, und entsprechende berechnete Größen werden dann als Steuergerät-Ausgangsgrößen über die Externschnittstelle wieder ausgegeben. Diese Funktionalität der Softwarekonfiguration des Steuergeräts, die im Wesentlichen mit der durch die Recheneinheit umgesetzten Funktionalität in Verbindung steht, wird hier als Internfunktionalität bezeichnet. Die Anwendungsfelder elektronischer Steuergeräte sind vielfältig, sie liegen beispielsweise im automotiven Bereich, in der Luft- und Raumfahrt und ganz allgemein in industriellen Anwendungen, wie beispielsweise der Prozessindustrie. Bei der Recheneinheit handelt es sich bei derzeit noch weitverbreiteten elektronischen Steuergeräten meist um einen Mikrocontroller, einen digitalen Signalprozessor, teilweise auch um programmierbare Schaltungsstrukturen, beispielsweise in Form von Field Programmable Gate Arrays (FPGA).

Die Softwareentwicklung für Steuergeräte wird oft im sogenannten V-Zyklus abgebildet. Im V-Zyklus werden verschiedene Entwicklungsstationen durchlaufen, beginnend bei einem abstrakten Funktionstest beispielsweise eines Regelungsalgorithmus ohne jeden Bezug zur späteren Steuergerät-Hardware (Model-in-the-Loop), über den hier interessierenden Test eines Programmcodes für das später zum Einsatz kommenden Serien-Steuergerät, wobei jedoch das Serien-Steuergerät noch nicht vorliegt, sondern nur in Software abgebildet ist als virtuelles Steuergerät (Software-in-the-Loop, SIL), über den Test des physikalisch vorhandenen Serien-Steuergeräts mit dem Serien-Steuergerät Programmcode in einer ganz oder teilweise simulierten Umgebung (Hardware-in-the-Loop, HIL), bis schließlich zum Test des Serien-Steuergeräts in der tatsächlichen physikalischen Umgebung. Dies ist eine in der Industrie etablierte und standardmäßig eingesetzte Kette von Entwicklungsschritten, die sich bewährt hat, um zuverlässig Software für elektronische Steuergeräte zu entwickeln und intensiv zu testen.

Die Anmelderin unterstützt die verschiedenen Stationen des V-Zyklus durch entsprechende Hard- und Software-Werkzeuge. Bei dem hier betrachteten Verfahren, System und Simulator handelt es sich um den Anwendungsfall des Software-in-the-Loop-Tests, den die Anmelderin mit der VEOS-Umgebung unterstützt (siehe Produktbroschüre "VEOS Platform for PC-based simulation of models and ECU network communication", Februar 2020, dSPACE GmbH).

Das elektronische Steuergerät wird auf das virtuelle Steuergerät abgebildet, indem die Internfunktionalität der Softwarekonfiguration des elektronischen Steuergeräts als Internfunktionalität einer Softwarekonfiguration des virtuellen Steuergeräts übernommen wird: es wird also im Rahmen des Tests des virtuellen Steuergeräts durch eine Ausführung des Programmcodes auf der Simulatorrecheneinheit tatsächlich der für das elektronische Steuergerät gedachte Programmcode getestet, nachdem er für die Simulatorrecheneinheit kompiliert worden ist.

Auch in DE 10 2013 212839 A1 wird ein Verfahren zum Entwickeln und/oder Testen eines Mikrokontrollers ein virtueller Prototyp eingesetzt, bei dem es sich um ein Simulationsmodell des bereitzustellenden Ziel-Mikrocontrollers handelt, der zur Ziel-Hardware funktional identisch ist. Dabei kann auf und / oder mit dem Simulationsmodell des Mikrocontrollers dieselbe Software wie auf dem realen, physischen Mikrocontroller ausgeführt werden.

Ferner wird die Externschnittstellenfunktionalität des elektronischen Steuergerätes, die also im Zusammenhang mit der Externschnittstelle des elektronischen Steuergeräts steht, ersetzt durch eine Datentransferfunktionalität der Softwarekonfiguration der Simulatorrecheneinheit, wobei die Softwarekonfiguration des virtuellen Steuergeräts in ausführbaren Code für die Simulatorrecheneinheit übersetzt und auf dem Simulator ausgeführt wird. Dies kann beispielsweise bedeuten, dass das Verschicken einer CAN-Busnachricht, also der Aufruf einer Externschnittstellenfunktionalität des elektronischen Steuergeräts, ersetzt wird durch einen entsprechenden Schreibbefehl in den Bereich eines shared memory, auf den sowohl das softwaremäßig realisierte virtuelle Steuergerät auf der Simulatorrecheneinheit wie auch der - ebenfalls softwaremäßig realisierte - Kommunikationspartner, auf den hier nicht näher eingegangen wird, Zugriff haben. Das bedeutet, dass Aufrufe von Treiberkomponenten der Externschnittstelle auf dem echten elektronischen Steuergerät nicht auf das virtuelle Steuergerät auf dem Simulator übertragen werden, sondern durch die Datentransferfunktionalität der Softwarekonfiguration der Simulatorrecheneinheit ersetzt werden.

Wenn mehrere elektronische Steuergeräte getestet werden sollen, beispielsweise weil sie gemeinsam das interessierende Bordnetz eines Kraftfahrzeugs bilden und dort miteinander interagieren, dann wird jedes der Steuergeräte durch eine Hardwarekonfiguration und eine Softwarekonfiguration beschrieben, also schlicht durch die Beschreibung der vorhandenen Hardwarekomponenten und der ihnen zugeordneten Softwarekomponenten. Jedes der elektronischen Steuergeräte wird dann abgebildet auf ein virtuelles Steuergerät auf dem Simulator. Die verschiedenen virtuellen Steuergeräte bilden softwaremäßig jedes für sich auf dem Simulator eine Einheit, gleichwohl können sie aber beispielsweise alle auf derselben Simulatorrecheneinheit des Simulators ausgeführt werden. Es ist auch möglich, dass verschiedene virtuelle Steuergeräte auf verschiedenen Simulatorrecheneinheiten des Simulators berechnet werden, sofern der Simulator über mehrere Recheneinheiten verfügt (beispielsweise mehrere Prozessormodule, mehrere Kernel eines Prozessors). Je nach technischer Umsetzung ändert sich dann auch die Datentransferfunktionalität, mit der die verschiedenen virtuellen Steuergeräte Informationen auf dem Simulator miteinander austauschen können. Diese Vorgehensweise hat verschiedene Vorteile, insbesondere weil die Struktur des Verbundes der zu testenden elektronischen Steuergeräte in der realen Welt in der virtuellen Welt des Simulators und der dort implementierten virtuellen Steuergeräte erhalten bleibt.

Es werden zunehmend Steuergeräte eingesetzt, die einen deutlich komplizierteren hardwaremäßigen Aufbau haben, die beispielsweise nicht nur über einen Mikrocontroller oder einen digitalen Signalprozessor und über eine Externschnittstelle verfügen, sondern über eine Vielzahl verschiedener Recheneinheiten, die auf ganz unterschiedlichen Technologien beruhen, und häufig auch integriert realisiert sind als System-on-Chip (SoC).

Aufgabe der Erfindung ist es, eine automatische Testmöglichkeit für derartige elektronische Steuergeräte mit verschiedenen Recheneinheiten unterschiedlicher Art anzubieten, die auf einfache und automatische Weise die Handhabung einer komplexen Hardwarestruktur und Übertragung dieser Struktur auf einen Simulator ermöglicht.

Die Aufgabe ist bei dem eingangs beschriebenen Verfahren zum Test wenigstens eines elektronischen Steuergeräts, als virtuelles Steuergerät auf einem Simulator mit wenigstens einer Simulatorrecheneinheit dadurch gelöst, dass die Hardwarekonfiguration des elektronischen Steuergeräts wenigstens eine erste Recheneinheit und eine zweite Recheneinheit unterschiedlicher Art aufweist, dass die Softwarekonfiguration zumindest Internfunktionalitäten für die erste Recheneinheit und die zweite Recheneinheit umfasst, wobei zumindest die Internfunktionalität der ersten Recheneinheit eine Internfunktion der Internfunktionalität der zweiten Recheneinheit aufruft. Bei der vorliegenden Anwendung ist es wichtig, dass die verschiedenen Recheneinheiten des elektronischen Steuergeräts voneinander Gebrauch machen, also dass sie die von der jeweiligen Recheneinheit zur Verfügung gestellte Internfunktionalität nutzen und aufrufen.

Es könnte beispielsweise sein, dass es sich bei der ersten Recheneinheit um eine "normale" CPU handelt, beispielsweise um eine ARM-CPU des Typs Cortex A. Diese CPU macht sich die Internfunktionalität der zweiten Recheneinheit, bei der es sich beispielsweise um einen Matrixbeschleuniger handelt, zunutze. Es liegen insoweit also zwei Recheneinheiten unterschiedlicher Art vor. Mit anderen Worten bedeutet dies, dass es einen Datenaustausch zwischen der ersten Recheneinheit und der zweiten Recheneinheit gibt, die erste Recheneinheit teilt der zweiten Recheneinheit beispielsweise mit, mit welchen Daten die zweite Recheneinheit welche Funktion ausführen soll, und die zweite Recheneinheit liefert das Ergebnis dieser Anwendung seiner Internfunktionalität als Ergebnis an die erste Recheneinheit zurück.

Erfindungsgemäß ist weiter vorgesehen, dass eine Beschreibung der Hardwarekonfiguration und der Softwarekonfiguration des elektronischen Steuergeräts einschließlich der Zuordnung der Internfunktionalitäten zu den Recheneinheiten und die Internfunktionalitäten selbst bereitgestellt werden. Dies bedeutet nichts anderes, als dass die Beschreibung insgesamt die Komponenten der Hardwarekonfiguration des Steuergerätes benennt, und dass die Beschreibung auch die Softwarekonfiguration in Form der Internfunktionalitäten auf den jeweiligen Recheneinheiten der Hardwarekonfiguration des Steuergeräts benennt, sodass klar ist, welche Komponenten der Hardwarekonfiguration benutzt werden und welche Komponenten der Softwarekonfiguration bzw. welche Internfunktionalitäten dort zur Ausführung vorgesehen sind.

Die erfindungsgemäße Ausgestaltung des Verfahrens sieht weiterhin vor, dass mittels Auswertung der Beschreibung des elektronischen Steuergeräts jede Recheneinheit jeder Art mit einer zugeordneten Internfunktionalität auf eine virtuelle Unterrecheneinheit entsprechender Art abgebildet wird, wobei die Internfunktionalität der abgebildeten Recheneinheit in eine auf der Simulatorrecheneinheit ausführbare Internfunktionalität der virtuellen Unterrecheneinheit übertragen wird. Durch den Begriff der virtuellen Unterrecheneinheit wird verdeutlicht, dass durch das Verfahren aus Anwendersicht das elektronischen Steuergerät auch weiterhin auf ein einziges virtuelles Steuergerät übertragen wird, das allerdings virtuelle Unterrecheneinheiten aufweist, die dem Umstand Rechnung tragen, dass das elektronische Steuergerät eine Mehrzahl von Recheneinheiten aufweist. Damit wird das Ziel verfolgt, für den Anwender trotz des komplizierten Aufbaus des elektronischen Steuergeräts mit einer Mehrzahl von Recheneinheiten auch weiterhin eine strukturell identische Abbildung dieses komplexen elektronischen Steuergeräts auf dem Simulator zur Verfügung zu stellen.

Gemäß der erfindungsgemäßen Ausgestaltung des Verfahrens ist weiterhin vorgesehen, dass mittels Auswertung der bereitgestellten Internfunktionalitäten der ersten Recheneinheit und der zweiten Recheneinheit ermittelt wird, welche Recheneinheiten durch Zugriff auf eine Internfunktionalität einer anderen Recheneinheit in Datenaustausch miteinander stehen, und dass die Zugriffe auf Internfunktionen einer anderen Recheneinheit ersetzt werden durch eine Datentransferfunktionalität der Softwarekonfiguration der Simulatorrecheneinheit. Dies setzt voraus, dass in dem Auswertungsschritt bekannt ist, über welche Internfunktionalitäten die verschiedenen Recheneinheiten dem Grunde nach verfügen. Je nachdem, um welche Art von Recheneinheit es sich handelt, muss im Auswerteschritt die entsprechende Syntax der Softwarekonfiguration der jeweiligen Recheneinheit bekannt sein. In Abhängigkeit davon, in welchem Format die Softwarekonfiguration der jeweiligen Recheneinheit vorliegt, muss in der Auswertung die Syntax der Internfunktionalität auf hochsprachlicher Programmierebene oder gegebenenfalls auch im Binärcode usw. bekannt sein.

Die Aufgabe ist bei dem eingangs geschilderten System entsprechend dadurch gelöst, dass die Hardwarekonfiguration des elektronischen Steuergeräts wenigstens eine erste Recheneinheit und eine zweite Recheneinheit unterschiedlicher Art aufweist, dass die Softwarekonfiguration des elektronischen Steuergeräts zumindest Internfunktionalitäten für die erste Recheneinheit und die zweite Recheneinheit umfasst, wobei zumindest die Internfunktionalität der ersten Recheneinheit eine Internfunktion der Internfunktionalität der zweiten Recheneinheit aufruft, dass der Simulator eine Beschreibung der Hardwarekonfiguration und der Softwarekonfiguration des elektronischen Steuergeräts einschließlich der Zuordnung der Internfunktionalitäten der Softwarekonfiguration des elektronischen Steuergeräts zu den Recheneinheiten des elektronischen Steuergeräts und die Internfunktionalitäten der Recheneinheiten des elektronischen Steuergeräts selbst erhält, dass der Simulator mittels Auswertung der Beschreibung des elektronischen Steuergeräts jede Recheneinheit jeder Art des elektronischen Steuergeräts mit einer zugeordneten Internfunktionalität auf eine virtuelle Unterrecheneinheit entsprechender Art abbildet, wobei die Internfunktionalität des elektronischen Steuergerätsder abgebildeten Recheneinheit in eine auf der Simulatorrecheneinheit ausführbare Internfunktionalität der virtuellen Unterrecheneinheit übertragen wird und dass der Simulator mittels Auswertung der bereitgestellten Internfunktionalitäten der ersten Recheneinheit des elektronischen Steuergeräts und der zweiten Recheneinheit des elektronischen Steuergeräts ermittelt, welche Recheneinheiten des elektronischen Steuergeräts durch Zugriff auf eine Internfunktion einer anderen Recheneinheit des elektronischen Steuergeräts in Datenaustausch miteinander stehen und die Zugriffe auf Internfunktionen einer anderen Recheneinheit bei dem virtuellen Steuergerät ersetz durch eine Datentransferfunktionalität der Softwarekonfiguration der Simulatorrecheneinheit.

Entsprechend ist die Erfindung gelöst durch den Simulator des Systems, der das beschriebene Verfahren ausführt.

Im Ergebnis ist es durch die erfindungsgemäße Ausführung des Verfahrens , des Systems und des Simulators möglich, ein Steuergerät mit einer komplexen Hardwarekonfiguration, die mehrere Recheneinheiten umfasst, automatisch auf ein virtuelles Steuergerät abzubilden, das einen komplexen internen Aufbau mit mehreren virtuellen Unterrecheneinheiten hat, wobei der Anwender des automatisch durchgeführten Verfahrens nicht selbst Sorge tragen muss für die aufwendige und auch fehlerträchtige Übertragung des komplexen internen Aufbaus des realen Steuergeräts auf entsprechende Komponenten eines virtuellen Steuergeräts. Mit dem Verfahren ist es möglich zu überprüfen, ob der Programmcode - und zwar genau der Programmcode -, der die Internfunktionalität des elektronischen Steuergeräts implementiert, die erwartungsgemäße Funktionalität und das erwartungsgemäße Verhalten aufweisen, ohne dass das elektronische Steuergerät tatsächlich vorhanden ist. Das Verhalten der Internfunktionalität auf der virtuellen Unterrecheneinheit kann in einem weiteren Verfahrensschritt verglichen werden mit dem erwartungsgemäßen Verhalten und bei Abweichung des tatsächlichen Verhaltens von dem erwartungsgemäßen Verhalten wird die Abweichung von dem Simulator nach außen signalisiert und gegebenenfalls auch durch ein Protokoll dokumentiert.

Bei den verschiedenen Arten von Recheneinheiten des realen Steuergeräts kann es sich beispielsweise handeln um Prozessoren (CPU), Mikrocontroller (µC), Grafikprozessoren (GPU), programmierbare Logikgatter (FPGA), Neuronale Netzwerk Beschleuniger (NNA), Matrixbeschleuniger (MACC), und Security Chips (zum Beispiel für kryptografischen Funktionalitäten, Schlüsseldatenbanken usw.).

Die Erfindung wird in Verfahrensanspruch 1 sowie in den entsprechenden weiteren unabhängigen Ansprüche 9,11 und 12 definiert.

Eine bevorzugte Ausgestaltung des Verfahrens, Systems und Simulators zeichnet sich dadurch aus, dass mehrere Recheneinheiten identischer Art des elektronischen Steuergeräts auf genau eine virtuelle Unterrecheneinheit dieser Art abgebildet werden, insbesondere alle Recheneinheiten identischer Art des elektronischen Steuergeräts auf genau eine virtuelle Unterrecheneinheit dieser Art abgebildet werden. Das bedeutet beispielsweise, dass mehrere Grafikprozessoren des elektronischen Steuergeräts auf eine virtuelle Unterrecheneinheit abgebildet werden, was zu einer verbesserten Übersichtlichkeit der Struktur des virtuellen Gesamt-Steuergeräts beiträgt, aber auch zu einer ökonomischeren Realisierung des virtuellen Steuergeräts beitragen kann (geringerer Codeumfang, weniger benötigte Simulationsmodule).

Bei einer weiteren bevorzugten Ausgestaltung des Verfahrens, Systems und Simulators ist vorgesehen, dass die Übertragung der Internfunktionalität der abgebildeten Recheneinheit des elektronischen Steuergeräts in eine auf der Simulatorrecheneinheit ausführbare Internfunktionalität der virtuellen Unterrecheneinheit die Verwendung eines auf der Simulatorrecheneinheit lauffähigen Simulationsmoduls für die abgebildete Recheneinheit des elektronischen Steuergeräts umfasst. Dabei kann es sich beispielsweise um Simulationsmodule handeln, die häufig von den Herstellern der realen Recheneinheiten des elektronischen Steuergeräts bereitgestellt werden, beispielsweise im Rahmen der Software-Entwicklungsumgebung (Software Development Kit, SDK) für die jeweilige Recheneinheit. Gerade in diesem Fall bietet es sich also an, mehrere Recheneinheiten identischer Art des elektronischen Steuergeräts auf genau eine virtuelle Unterrecheneinheit dieser Art abzubilden, sodass nicht mehrere Instanzen eines Simulationsmoduls parallel betrieben (und gegebenenfalls auch gekauft und lizenziert) werden müssen.

Eine andere Weiterbildung des Verfahrens, Systems und Simulators ist dadurch gekennzeichnet, dass die von der Internfunktionalität der ersten Recheneinheit aufgerufene Internfunktion der Internfunktionalität der zweiten Recheneinheit das Laden oder Speichern von Daten aus dem oder in den Speicherbereich der zweiten Recheneinheit betrifft.

Eine bevorzugte Ausgestaltung des Verfahrens, Systems und Simulators sieht weiterhin vor, dass die Auswertung der bereitgestellten Internfunktionalitäten der ersten Recheneinheit und der zweiten Recheneinheit auf Grundlage des auf dem elektronischen Steuergerät lauffähigen Binärcodes der Internfunktionalitäten und/oder auf Grundlage des hochsprachlichen Quellcodes der Internfunktionalitäten erfolgt. Die Auswertung erfolgt automatisch durch eine entsprechende Syntaxanalyse des entsprechenden Binärcodes oder des hochsprachlichen Quellcodes.

Bei einer weiteren bevorzugten Ausgestaltung des Verfahrens, Systems und Simulators wird für eine computerbasierte grafische Simulationsumgebung, insbesondere für eine computerbasierte grafische Simulationsumgebung des Simulators, jede virtuelle Unterrecheneinheit als Block dargestellt, also als Block eines Signalflussdiagramms in Blockschaltbildform.

Im Zusammenhang mit der Darstellung von virtuellen Unterrecheneinheiten als Blöcke ist bei einer weiteren bevorzugten Ausgestaltung des Verfahrens, Systems und Simulators vorgesehen, dass die Blöcke der virtuellen Recheneinheiten, deren Recheneinheiten als in Datenaustausch miteinander in Verbindung stehend erkannt worden sind, mit Datentransfer-Ports an den entsprechenden Blöcken gekennzeichnet werden, wobei der Datentransfer durch eine die Datentransfer-Ports der virtuellen Recheneinheiten verbindende Signalleitung gekennzeichnet wird. Dadurch ergibt sich ein intuitives Verständnis für den Wirkzusammenhang zwischen verschiedenen virtuellen Unterrecheneinheiten, wie der Anwender es von Blockschaltbilddiagrammen gewohnt ist.

Die Aufgabe wird auch gelöst mit einem Computerprogramm, das Befehle umfasst, die bei der Ausführung des Programms durch eine Simulatorrecheneinheit eines Simulators diese veranlassen, das zuvor dargestellte Verfahren zum Test eines virtuellen Steuergeräts auszuführen.

Im Einzelnen gibt es nun eine Vielzahl von Möglichkeiten, das erfindungsgemäße Verfahren, das erfindungsgemäße System und den erfindungsgemäßen Simulator auszugestalten und weiterzubilden. Dazu wird verwiesen einerseits auf die den unabhängigen Patentansprüchen nachgeordneten Patentansprüche, andererseits auf die folgende Beschreibung von Ausführungsbeispielen in Verbindung mit der Zeichnung. In der Zeichnung zeigen
- Fig. 1: schematisch ein Verfahren, ein System und einen Simulator zum Test eines elektronischen Steuergeräts als virtuelles Steuergerät, wobei jedes elektronische Steuergerät nur eine Recheneinheit aufweist,
- Fig. 2: schematisch das erfindungsgemäße Verfahren, das System und den Simulator zum Test eines elektronischen Steuergeräts als virtuelles Steuergerät, wobei das elektronische Steuergerät mehrere Recheneinheiten aufweist und automatisch strukturerhaltend auf das virtuelle Steuergerät abgebildet wird,
- Fig. 3: schematisch ein komplexes elektronisches Steuergerät mit verschiedenen Arten von Recheneinheiten,
- Fig. 4: schematisch die Abbildung des elektronischen Steuergeräts gemäß Fig. 3 auf ein virtuelles Steuergerät und
- Fig. 5: schematisch einen Verbund von fünf virtuellen Steuergeräten, von denen ein virtuelles Steuergerät mehrere virtuelle Unterrecheneinheiten aufweist.

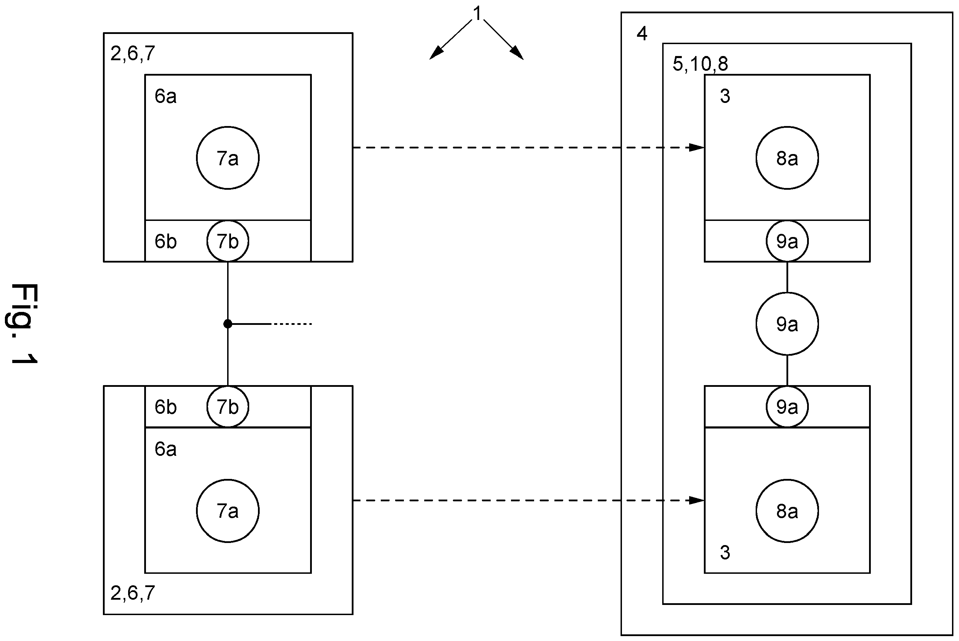

In den Fig. 1 bis 5 ist jeweils in Gänze oder auch nur in verschiedenen Aspekten ein Verfahren 1 zum Test wenigstens eines elektronischen Steuergeräts 2 als virtuelles Steuergerät 3 auf einem Simulator 4 mit wenigstens einer Simulatorrecheneinheit 5 dargestellt. Gleichermaßen und sinngemäß sind ein entsprechendes System 4, 6, 7 und ein entsprechender Simulator 4 abgebildet.

Alles, was nachfolgend zu dem Verfahren 1 ausgeführt wird, gilt gleichermaßen und sinngemäß auch für das System 4, 6, 7 und den Simulator 4.

Das Verfahren 1 umfasst nicht nur den Test des virtuellen Steuergeräts 3 auf dem Simulator 4, sondern auch die vorangehenden Schritte, um überhaupt das reale, elektronische Steuergerät 2 als virtuelles Steuergerät 3 zu erhalten. Ziel ist es, die Software des realen, elektronischen Steuergeräts 2 zumindest teilweise auf dem Simulator 4 zu testen, der mit der Hardware des Steuergeräts 2 im Regelfall nichts zu tun hat; bei dem Simulator 4 kann es sich im einfachsten Fall um einen PC handeln. Darin liegt aber gerade die interessante Besonderheit des hier beschriebenen Testverfahrens 1, dass nämlich die Software des - möglicherweise erst zu einem viel späteren Zeitpunkt existierenden - Serien-Steuergeräts 2 auch ohne die originäre Hardware des Steuergeräts 2 vorab getestet werden kann.

Jedenfalls weist das elektronische Steuergerät 2 eine Hardwarekonfiguration 6 mit einer Recheneinheit 6a und einer Externschnittstelle 6b zum Austausch von Daten mit Kommunikationspartnern außerhalb des Steuergeräts 2 auf und ferner eine der Hardwarekonfiguration 6 zugeordnete Softwarekonfiguration 7. Die Hardwarekonfiguration 6 und die zugeordnete Softwarekonfiguration 7 sind also die hardwaremäßigen und die softwaremäßigen Ausstattungsmerkmale des elektronischen Steuergeräts 2.

Fig. 1 zeigt den einfachen Fall, dass die beiden dargestellten elektronischen Steuergerät 2 nur jeweils eine einzige Recheneinheit 6a aufweisen. Dass noch weitere Steuergeräte 2 vorhanden sein können, wie dies beispielsweise in einem Steuergeräteverbund in einem Kraftfahrzeug üblich ist, ist angedeutet. Die Steuergeräte 2 selbst und die Komponenten der Steuergeräte 2 sind jeweils mit identischen Bezugszeichen gekennzeichnet, was hier jedoch ohne Belang ist, der relevante Sinngehalt erschließt sich ohne Weiteres.

Die Softwarekonfiguration 7 umfasst eine Internfunktionalität 7a und eine Externschnittstellenfunktionalität 7b. Die beiden elektronischen Steuergeräte 2 stehen über ihre jeweiligen Externschnittstellen 6b miteinander in Kommunikationsverbindung.

Das elektronische Steuergerät 2 wird auf das virtuelle Steuergerät 3 abgebildet (von links nach rechts verlaufende Strichlinien in Fig. 1), indem die Internfunktionalität 7a der Softwarekonfiguration 7 des elektronischen Steuergeräts 2 als Internfunktionalität 8a einer Softwarekonfiguration 8 des virtuellen Steuergeräts 3 übernommen wird. Wenn es sich bei der Recheneinheit 6a des Steuergeräts 2 um einen Mikrocontroller handelt, dessen Internfunktionalität 7a, beispielsweise ein Regelungsalgorithmus, in C-Code vorliegt, und es sich bei der Simulatorrecheneinheit 5 des Simulators 4 um eine x86-Prozessor handelt, dann ist es möglich, den C-Code des Steuergeräts 2 zu übernehmen, indem nämlich der C-Code für die Zielhardware, also den x86-Prozessor des Simulators 4, kompiliert wird, wodurch die Internfunktionalität 7a des Steuergeräts 2 tatsächlich ohne Veränderungen getestet werden kann mit dem virtuellen Steuergerät 3.

Ferner wird das elektronische Steuergerät 2 auf das virtuelle Steuergerät 3 abgebildet, indem die Externschnittstellenfunktionalität 7b des elektronischen Steuergerätes 2 ersetzt wird durch eine Datentransferfunktionalität 9a einer Softwarekonfiguration 10 der Simulatorrecheneinheit 5, wobei die Softwarekonfiguration 8 des virtuellen Steuergeräts 3 in ausführbaren Code für die Simulatorrecheneinheit 5 übersetzt und auf dem Simulator 4 ausgeführt wird. Im in Fig. 1 dargestellten Fall handelt es sich bei der Externschnittstellenfunktionalität 7b des elektronischen Steuergerätes 2 um die Treiberfunktionalität eines seriellen Feldbusses gemäß dem CAN-Standard (Controller Area Network). Diese Funktionalität wird nicht auf den Simulator 4 übertragen, weil dessen Hardwareausstattung ein diesbezügliches Merkmal nicht aufweist. Es wird als Ersatz mit Mitteln zum Datenaustausch gearbeitet, die auf dem Simulator 4 vorliegen: dies ist die Datentransferfunktionalität 9a der Softwarekonfiguration 10 der Simulatorrecheneinheit 5, die hier in der Nutzung einer shared-memory-Lösung liegt, siehe Fig. 1 rechts.

Die Übersetzung der Softwarekonfiguration 8 des virtuellen Steuergeräts 3 in ausführbaren Code für die Simulatorrecheneinheit 5 und das Ausführen des Codes auf dem Simulator 4 ermöglicht jedenfalls den Test der Internfunktionalität 7a des Steuergeräts 2, ohne dass das Steuergerät 2 tatsächlich vorliegt. Die auf dem Simulator 4 erzielten Resultate bei Ausführung des Codes können verglichen werden mit dem erwarteten Verhalten und so Mängel in der Internfunktionalität 7a der Softwarekonfiguration 7 des elektronischen Steuergeräts 2 - auch automatisch - aufgedeckt werden.

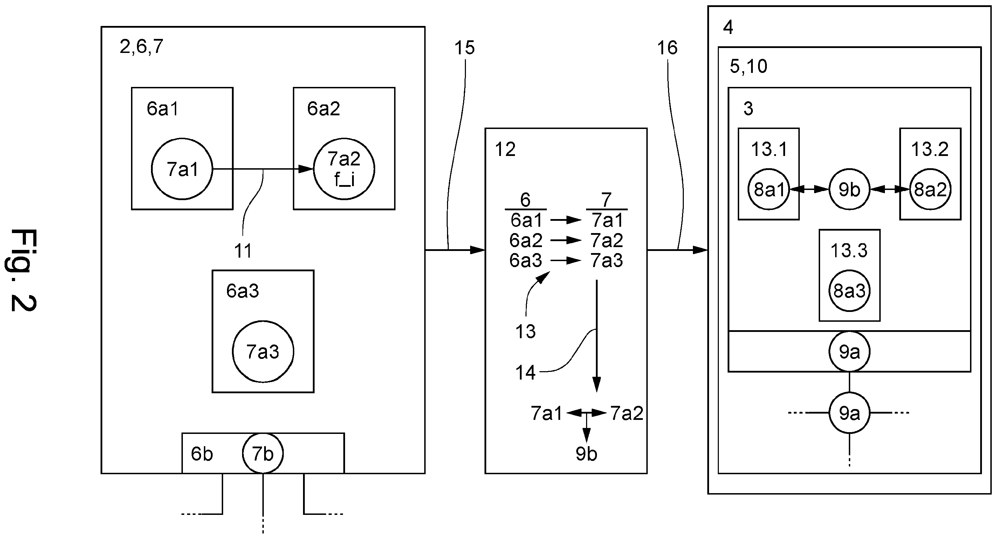

In Fig. 2 ist nun der komplexere und vorrangig interessierende Fall gezeigt, dass die Hardwarekonfiguration 6 des elektronischen Steuergeräts 2 wenigstens eine erste Recheneinheit 6a1, eine zweite Recheneinheit 6a2 und auch eine dritte Recheneinheit 6a3 unterschiedlicher Art aufweist; wichtig ist nur, dass mehr als eine Recheneinheit vorliegt. Dies ist bei modernen Steuergerätarchitekturen zunehmend der Fall, der Trend geht zur Konzentration von Rechenkapazitäten auf eine Platine, nicht selten sogar auch auf einen komplexen Chip, sogenannte System-on-Chip-Lösungen (SoC). Der Anwender des Verfahrens 1 zum Test eines komplexen elektronischen Steuergeräts 2 möchte bei der Handhabung des Tests auch wieder nur mit "dem" elektronischen Steuergerät 2 arbeiten, mit dessen Außengrenze in Form der Externschnittstelle 6b, unabhängig davon, wie komplex der interne Aufbau bzw. wie komplex die Hardwarekonfiguration 6 des elektronischen Steuergeräts 2 ist.

Die mehreren Recheneinheiten 6a1, 6a2, 6a3 des elektronischen Steuergeräts 2 bringen es mit sich, dass die Softwarekonfiguration 7 des elektronischen Steuergeräts 2 zumindest Internfunktionalitäten 7a1, 7a2, 7a3 für die erste Recheneinheit 6a1 und die zweite Recheneinheit 6a2 umfasst und natürlich auch für die dritte Recheneinheit 6a3, wobei zumindest die Internfunktionalität 7a1 der ersten Recheneinheit 6a1 eine Internfunktion f_i der Internfunktionalität 7a2 der zweiten Recheneinheit 6a2 aufruft 11. Es gibt also nicht mehr nur einen Datenaustausch mit externen Kommunikationspartnern des Steuergeräts 2, sondern auch einen Datenaustausch zwischen den mehreren Recheneinheiten 6a1, 6a2 des Steuergeräts 2.

Bei dem Verfahren 1 ist weiter vorgesehen, dass eine Beschreibung 12 der Hardwarekonfiguration 6 und der Softwarekonfiguration 7 des elektronischen Steuergeräts 2 einschließlich der Zuordnung 13 der Internfunktionalitäten 7a1, 7a2, 7a3 der Softwarekonfiguration 7 des elektronischen Steuergeräts 2 zu den Recheneinheiten 6a1, 6a2, 6a3 des elektronischen Steuergeräts 2 bereitgestellt 15 wird und auch die Internfunktionalitäten 7a1, 7a2, 7a3 der Recheneinheiten 6a1, 6a2, 6a3 des elektronischen Steuergeräts 2 selbst bereitgestellt 15 werden.

Darüber hinaus ist verfahrensgemäß vorgesehen, dass mittels Auswertung der Beschreibung 12 des elektronischen Steuergeräts 2 jede Recheneinheit 6a1, 6a2, 6a3 jeder Art des elektronischen Steuergeräts 2 mit einer zugeordneten Internfunktionalität 7a1, 7a2, 7a3 auf eine virtuelle Unterrecheneinheit 13.1, 13.2, 13.3 entsprechender Art abgebildet 16 wird, wobei die Internfunktionalität 7a1, 7a2, 7a3 der abgebildeten Recheneinheit 6a1, 6a2, 6a3 des elektronischen Steuergeräts 2 in eine auf der Simulatorrecheneinheit 5 ausführbare Internfunktionalität 8a1, 8a2, 8a3 der virtuellen Unterrecheneinheit 13.1, 13.2, 13.2 übertragen wird.

Schließlich wird mittels Auswertung 14 der bereitgestellten Internfunktionalitäten 7a1, 7a2, 7a3 der ersten Recheneinheit 6a1 des elektronischen Steuergeräts 2 und der zweiten Recheneinheit 6a2 des elektronischen Steuergeräts 2 - und im Beispiel gemäß Fig. 2 auch mittels der dritten Recheneinheit 6a3 des elektronischen Steuergeräts 2 - ermittelt, welche Recheneinheiten 6a1, 6a1, 6a3 des elektronischen Steuergeräts 2 durch Zugriff auf eine Internfunktion f_i einer anderen Recheneinheit 6a1, 6a1, 6a3 des elektronischen Steuergeräts 2 in Datenaustausch miteinander stehen. Die Zugriffe 11 auf Internfunktionen f_i einer anderen Recheneinheit 6a1, 6a1, 6a3 werden bei dem virtuellen Steuergerät 3 ersetzt durch eine (interne) Datentransferfunktionalität 9b der Softwarekonfiguration 7 der Simulatorrecheneinheit 5.

Im Ergebnis entsteht nun auch bei einem komplexen Steuergerät 2 durch ein automatisiertes Verfahren ein korrespondierendes virtuelles Steuergerät 3 mit Unterrecheneinheiten 13.1, 13.2 13.3 mit einer (internen) Datentransferfunktionalität 9b der Softwarekonfiguration 7 der Simulatorrecheneinheit 5, für deren Realisierung der Anwender aber nicht aktiv Sorge tragen muss.

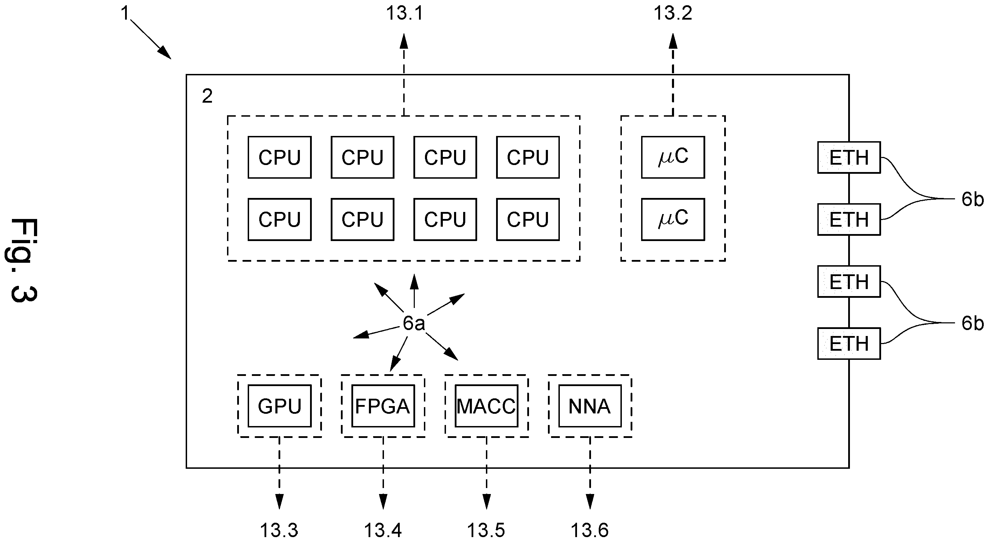

In Fig. 3 ist ein komplexes elektronisches Steuergerät 2 mit verschiedenen Arten von Recheneinheiten 6a gezeigt, im vorliegenden Fall sind dies Prozessoren (CPU), Mikrocontroller (µC), Grafikprozessoren (GPU), programmierbare Logikgatter (FPGA), Neuronale Netzwerk Beschleuniger (NNA) und Matrixbeschleuniger (MACC). Ferner weist das Steuergerät 2 eine Mehrzahl an Externschnittstellen 6b in Form von Ethernetschnittstellen (ETH) auf, die eine entsprechende Bandbreite zur Verfügung stellen, um den gegebenenfalls hohen Datentransfer von und zu den Recheneinheiten 6a beherrschen zu können.

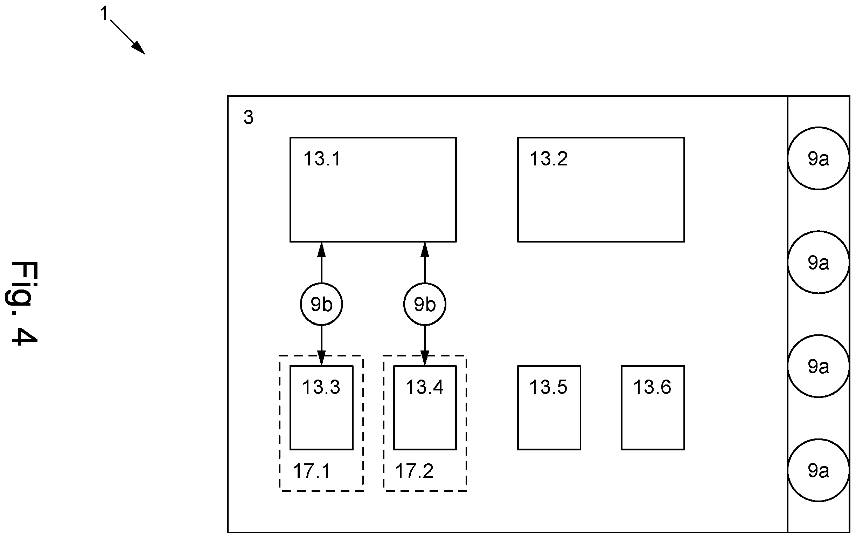

Die Fig. 3 und 4 zeigen eine Variante des Verfahrens 1, bei der das elektronische Steuergerät 2 gemäß Fig. 3 auf ein korrespondierendes virtuelles Steuergerät 3 übertragen wird. Die Besonderheit ist hier, dass mehrere Recheneinheiten 6a identischer Art des elektronischen Steuergeräts 2, also Prozessoren (CPU), Mikrocontroller (µC), Grafikprozessoren (GPU), programmierbare Logikgatter (FPGA), Neuronale Netzwerk Beschleuniger (NNA) und Matrixbeschleuniger (MACC), auf genau eine virtuelle Unterrecheneinheit 13.1, 13.2, 13.3, 13.4, 13.5 und 13.6 dieser Art abgebildet werden, tatsächlich sind alle Recheneinheiten 6a identischer Art des elektronischen Steuergeräts 2 auf genau eine virtuelle Unterrecheneinheit 13 dieser Art abgebildet worden. Fig. 3 zeigt anhand der gestrichelten Kästchen, welche Recheneinheiten 6a identischer Art des elektronischen Steuergeräts 2 auf welche virtuellen Unterrecheneinheiten 13 abgebildet werden.

Fig. 4 zeigt das resultierende virtuelle Steuergerät 3. Aus Gründen der Übersichtlichkeit sind die Internfunktionalitäten des elektronischen Steuergeräts 2 und die Internfunktionalitäten des virtuellen Steuergeräts 3 nicht ausdrücklich dargestellt. In Fig. 4 ist zu erkennen, welche Unterrecheneinheiten 13.1 und 13.3 sowie 13.1 und 13.4 in Datenaustausch stehen über (interne) Datentransferfunktionalitäten 9b.

Fig. 4 zeigt ferner, dass die Übertragung der Internfunktionalität der abgebildeten Recheneinheit 6a der Art Grafikprozessor (GPU) und programmierbare Logikgatter (FPGA) des elektronischen Steuergeräts 2 in eine auf der Simulatorrecheneinheit 5 ausführbare Internfunktionalität der virtuellen Unterrecheneinheit 13.3, 13.4 die Verwendung eines auf der Simulatorrecheneinheit 5 lauffähigen Simulationsmoduls 17.1, 17.2 für die abgebildeten Recheneinheiten der Art Grafikprozessor (GPU) und programmierbares Logikgatter (FPGA) des elektronischen Steuergeräts 2 umfasst. Der Code zur Programmierung derartiger Spezialchips ist ohne Weiteres nicht auf eine Simulatorrecheneinheit 5 übertragbar bzw. mit den Mitteln der Softwarekonfiguration 10 der Simulatorrecheneinheit 5 realisierbar. Die Hersteller der Recheneinheiten spezieller Art bieten häufig Simulatoren für Standardrechner an, die das Ausführen des Codes der Recheneinheiten spezieller Art auf diesen Standardrechnern ermöglichen. Derartige Werkzeuge werden hier als die genannten Simulationsmodule 17.1, 17.2 eingesetzt.

Bei der Durchführung des Verfahrens 1 kommt es vor, dass die von der Internfunktionalität 7a1 der ersten Recheneinheit 6a1 aufgerufene Internfunktion f_i der Internfunktionalität 7a2 der zweiten Recheneinheit 6a2 das Laden oder Speichern von Daten aus dem oder in den Speicherbereich der zweiten Recheneinheit 6a2 betrifft (siehe allgemein Fig. 2). Wenn es sich bei der ersten Recheneinheit 6a1 beispielsweise um einen Prozessor (CPU) handelt und bei der zweiten Recheneinheit 6a2 beispielsweise um ein Beschleunigungsmodul (Accelerator), welcher Art auch immer, dann könnte der Aufruf am Beispiel eines Pseudocodes wie folgt aussehen:

```
 Erste Recheneinheit 6a1 (CPU):
      ...
      //Bekanntmachung der zu bearbeitenden Daten "Source"
      CopyToAccelerator(Source[])
      //Starten der Internfunktion (kernel) auf der zweiten Recheneinheit
      //(Accelerator) unter Angabe des Ergebnisortes "Target"
      runAccelerator(Target[], kernel)
      ...
      /* Release control */
      ...
      listenOrWaitFor accelerator
      //Kopieren des Ergebnisses von Target zur weiteren Verfügung in
      //erster Recheneinheit 6a1
      CopyFromAccelerator(Target)
      Zweite Recheneinheit 6a2 (Accelerator):
      //Funktion "kernel" auf dem Accelerator
      function kernel(in ,out):
           do something with (in)
           assign result to out
```

Die auf der ersten Recheneinheit 6a1, also auf der CPU, verwendeten Befehle zum Zugriff auf die Funktionalität der zweiten Recheneinheit 6a2 werden oft bereitgestellt durch eine Software-Entwicklungsumgebung des Herstellers der zweiten Recheneinheit 6a2, hier also des Accelerators. Der Datenaustausch zwischen den Recheneinheiten kann zum Beispiel über ein shared memory erfolgen, auf das beide Recheneinheiten 6a1, 6a2 Zugriff haben.

Das Beispiel der Interaktion zwischen verschiedenen Recheneinheiten 6a1, 6a2 anhand des Pseudocodes ist sinnvoll, weil es verständlich macht, dass das Verfahren 1 die Auswertung 14 der bereitgestellten Internfunktionalitäten 7a1, 7a2, 7a3 der ersten Recheneinheit 6a1 und der zweiten Recheneinheit 6a2 und auch der dritten Recheneinheit 6a3 auf Grundlage des auf dem elektronischen Steuergerät 2 lauffähigen Binärcodes der Internfunktionalitäten 7a1, 7a2, 7a3 und/oder auf Grundlage des hochsprachlichen Quellcodes der Internfunktionalitäten 7a1, 7a2, 7a3 vornimmt. Im dargestellten Beispiel erfolgt die Auswertung 14 mit einem Analysewerkzeug, dass den Quellcode analysiert. Dieses automatische Analysewerkzeug hat Kenntnis von entsprechenden Funktionen, die einen Datentransfer oder einen Aufruf von Internfunktionalitäten 7a1, 7a2, 7a3 in einer Recheneinheit 6a1, 6a2, 6a3 bewirkt. Im obigen Beispiel muss das die Auswertung 14 umsetzende Analysewerkzeug den Quellcode also unter anderem nach den Befehlen "CopyToAccelerator" und "runAccelerator" durchsuchen.

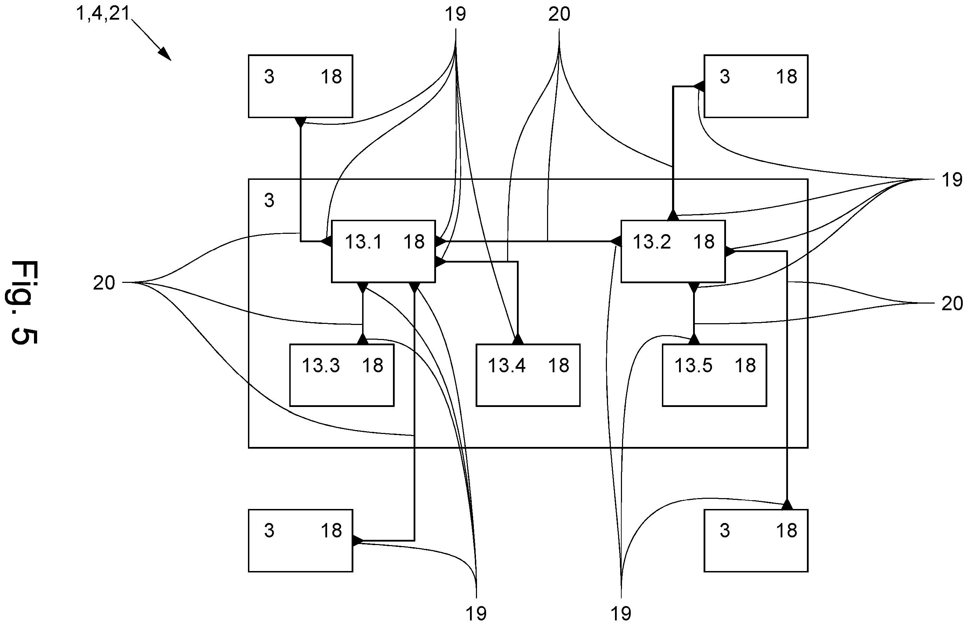

Fig. 5 zeigt, dass bei dem Verfahren 1 und dem Simulator 4 insbesondere auch vorgesehen ist, dass für eine computerbasierte grafische Simulationsumgebung 21, insbesondere des Simulators 4, jede virtuelle Unterrecheneinheit 13.1, 13.2 13.3. 13.4, 13.5 als Block 18 dargestellt wird, wie es von Blockschaltbilddarstellungen bekannt ist.

Fig. 5 zeigt einen Verbund mit fünf virtuellen Steuergeräten 3, von denen das zentral dargestellte virtuelle Steuergerät 3 mehrere virtuelle Unterrecheneinheiten 13.1, 13.2, 13.3, 13.4, 13.5 aufweist. In Fig. 5 ist auch gezeigt, dass die Blöcke 18 der virtuellen Unterrecheneinheiten 13.1, 13.2, 13.3, 13.4, 13.5, welche virtuellen Unterrecheneinheiten 13.1, 13.2, 13.3, 13.4, 13.5 als in Datenaustausch miteinander in Verbindung stehend erkannt worden sind, mit Datentransfer-Ports 19 an den entsprechenden Blöcken 18 gekennzeichnet werden, wobei der Datentransfer durch eine die Datentransfer-Ports 19 der virtuellen Unterrecheneinheiten 13.1, 13.2, 13.3, 13.4, 13.5 verbindende Signalleitung 20 gekennzeichnet wird.

### Bezugszeichen

- 1: Verfahren
- 2: elektronisches Steuergerät
- 3: virtuelles Steuergerät
- 4: Simulator
- 5: Simulatorrecheneinheit
- 6: Hardwarekonfiguration des elektronischen Steuergeräts
- 6a: Recheneinheit des elektronischen Steuergeräts
- 6a1: erste Recheneinheit des elektronischen Steuergeräts
- 6a2: zweite Recheneinheit des elektronischen Steuergeräts
- 6b: Externsschnittstelle des elektronischen Steuergeräts
- 7: Softwarekonfiguration des elektronischen Steuergeräts
- 7a: Internfunktionalität der Softwarekonfiguration des elektronischen Steuergeräts
- 7b: Externschnittstellenfunktionalität der Softwarekonfiguration des elektronischen Steuergeräts
- 8: Softwarekonfiguration des virtuellen Steuergeräts
- 8a: Internfunktionalitäten der Softwarekonfiguration des virtuellen Steuergeräts
- 9a, 9b: Datentransferfunktionalität (extern, intern) der Softwarekonfiguration der Simulatorrecheneinheit
- 10: Softwarekonfiguration der Simulatorrecheneinheit
- 11: Aufrufen einer Internfunktion der Internfunktionalität der zweiten Recheneinheit
- 12: Beschreibung der Hardwarekonfiguration und der Softwarekonfiguration des elektronischen Steuergeräts
- 13.1, 13.2: virtuelle Unterrecheneinheiten des virtuellen Steuergeräts
- 14: Auswertung der Internfunktionalitäten der Recheneinheiten des elektronischen Steuergeräts
- 15: Bereitstellen der Beschreibung der Hardwarekonfiguration und der Softwarekonfiguration des elektronischen Steuergeräts
- 16: Abbildung der Recheneinheiten des elektronischen Steuergeräts auf eine virtuelle Recheneinheit
- 17: auf der Simulatorrecheneinheit lauffähiges Simulationsmodul
- 18: Blöcke
- 19: Daten-Transferports
- 20: Signalleitungen
- 21: computerbasierte grafische Simulationsumgebung
- f_i: Internfunktion der Internfunktionalität der zweiten Recheneinheit

## Patentansprüche

1. Verfahren (1) zum Test wenigstens eines elektronischen Steuergeräts (2), als virtuelles Steuergerät (3) auf einem Simulator (4) mit wenigstens einer Simulatorrecheneinheit (5), wobei das elektronische Steuergerät (2) eine Hardwarekonfiguration (6) mit wenigstens einer Recheneinheit (6a) und einer Externschnittstelle (6b) zum Austausch von Daten und eine der Hardwarekonfiguration (6) zugeordnete Softwarekonfiguration (7) aufweist, wobei die Softwarekonfiguration (7) eine Internfunktionalität (7a) und eine Externschnittstellenfunktionalität (7b) umfasst, wobei das elektronische Steuergerät (2) auf das virtuelle Steuergerät (3) abgebildet wird, indem die Internfunktionalität (7a) der Softwarekonfiguration (7) des elektronischen Steuergeräts (2) als Internfunktionalität (8a) einer Softwarekonfiguration (8) des virtuellen Steuergeräts (3) übernommen wird und indem die Externschnittstellenfunktionalität (7b) des elektronischen Steuergerätes (2) ersetzt wird durch eine Datentransferfunktionalität (9a) einer Softwarekonfiguration (10) der Simulatorrecheneinheit (5), wobei die Softwarekonfiguration (8) des virtuellen Steuergeräts (3) in ausführbaren Code für die Simulatorrecheneinheit (5) übersetzt und auf dem Simulator (4) ausgeführt wird,
**dadurch gekennzeichnet,**
**dass** die Hardwarekonfiguration (6) des elektronischen Steuergeräts (2) wenigstens eine erste Recheneinheit (6a1) und eine zweite Recheneinheit (6a2) unterschiedlicher Art aufweist, dass die Softwarekonfiguration (7) des elektronischen Steuergeräts (2) zumindest Internfunktionalitäten (7a1, 7a2) für die erste Recheneinheit (6a1) und die zweite Recheneinheit (6a2) umfasst, wobei zumindest die Internfunktionalität (7a1) der ersten Recheneinheit (6a1) eine Internfunktion (f_i) der Internfunktionalität (7a2) der zweiten Recheneinheit (6a2) aufruft (11),
**dass** eine Beschreibung (12) der Hardwarekonfiguration (6) und der Softwarekonfiguration (7) des elektronischen Steuergeräts (2) einschließlich der Zuordnung (13) der Internfunktionalitäten (7a1), (7a2) der Softwarekonfiguration (7) des elektronischen Steuergeräts (2) zu den Recheneinheiten (6a1), (6a2) des elektronischen Steuergeräts (2) und die Internfunktionalitäten (7a1, 7a2) der Recheneinheiten (6a1, 6a2) des elektronischen Steuergeräts (2) selbst bereitgestellt (15) werden,
**dass** mittels Auswertung der Beschreibung (12) des elektronischen Steuergeräts (2) jede Recheneinheit (6a1, 6a2) jeder Art des elektronischen Steuergeräts (2) mit einer zugeordneten Internfunktionalität (7a1, 7a2) auf eine virtuelle Unterrecheneinheit (13.1, 13.2) entsprechender Art abgebildet (16) wird, wobei die Internfunktionalität (7a1, 7a2) des elektronischen Steuergeräts (2) der abgebildeten Recheneinheit (6a1, 6a2) in eine auf der Simulatorrecheneinheit (5) ausführbare Internfunktionalität (8a1, 8a2) der virtuellen Unterrecheneinheit (13.1, 13.2) übertragen wird und
**dass** mittels Auswertung (14) der bereitgestellten Internfunktionalitäten (7a1, 7a2) der ersten Recheneinheit (6a1) des elektronischen Steuergeräts (2) und der zweiten Recheneinheit (6a2) des elektronischen Steuergeräts (2) ermittelt wird, welche Recheneinheiten (6a1, 6a2) des elektronischen Steuergeräts (2) durch Zugriff auf eine Internfunktion (f_i) einer anderen Recheneinheit (6a1, 6a2) des elektronischen Steuergeräts (2) in Datenaustausch miteinander stehen und die Zugriffe (11) auf Internfunktionen (f_i) einer anderen Recheneinheit (6a1, 6a2) bei dem virtuellen Steuergerät (3) ersetzt werden durch eine Datentransferfunktionalität (9b) der Softwarekonfiguration (10) der Simulatorrecheneinheit (5).

2. Verfahren (1) nach Anspruch 1, **dadurch gekennzeichnet, dass** verschiedene Arten von Recheneinheiten (6a1, 6a2, 6a3) des elektronischen Steuergeräts (2) sind: Prozessoren (CPU), Mikrocontroller (µC), Grafikprozessoren (GPU), programmierbare Logikgatter (FPGA), Neuronale Netzwerk Beschleuniger (NNA), Matrixbeschleuniger (MACC), Security Chips.

3. Verfahren (1) nach Anspruch 1 oder 2, **dadurch gekennzeichnet, dass** mehrere Recheneinheiten (6a) identischer Art des elektronischen Steuergeräts (2) auf genau eine virtuelle Unterrecheneinheit (13) dieser Art abgebildet werden, insbesondere alle Recheneinheiten (6a) identischer Art des elektronischen Steuergeräts (2) auf genau eine virtuelle Unterrecheneinheit (13) dieser Art abgebildet werden.

4. Verfahren (1) nach einem der Ansprüche 1 bis 3, **dadurch gekennzeichnet, dass** die Übertragung der Internfunktionalität (8a1, 8a2, 8a3) der abgebildeten Recheneinheit (6a1, 6a2, 6a3) des elektronischen Steuergeräts (2) in eine auf der Simulatorrecheneinheit (5) ausführbare Internfunktionalität (8a1, 8a2, 8a3) der virtuellen Unterrecheneinheit (13.1, 13.2, 13.3) die Verwendung eines auf der Simulatorrecheneinheit (5) lauffähigen Simulationsmoduls (17, 17.1, 17.2) für die abgebildete Recheneinheit (6a1, 6a2, 6a3) des elektronischen Steuergeräts (2) umfasst.

5. Verfahren (1) nach einem der Ansprüche 1 bis 4, **dadurch gekennzeichnet, dass** die von der Internfunktionalität (7a1) der ersten Recheneinheit (6a1) aufgerufene Internfunktion (f_i) der Internfunktionalität (7a2) der zweiten Recheneinheit (6a2) das Laden oder Speichern von Daten aus dem oder in den Speicherbereich der zweiten Recheneinheit (6a2) betrifft.

6. Verfahren (1) nach einem der Ansprüche 1 bis 5, **dadurch gekennzeichnet, dass** die Auswertung (14) der bereitgestellten Internfunktionalitäten (7a1, 7a2) der ersten Recheneinheit (6a1) und der zweiten Recheneinheit (6a2) des elektronischen Steuergeräts (2) auf Grundlage des auf dem elektronischen Steuergerät (2) lauffähigen Binärcodes der Internfunktionalitäten (7a1, 7a2) und/oder auf Grundlage des hochsprachlichen Quellcodes der Internfunktionalitäten (7a1, 7a2) erfolgt.

7. Verfahren (1) nach einem der Ansprüche 1 bis 6, **dadurch gekennzeichnet, dass** für eine computerbasierte grafische Simulationsumgebung (21), insbesondere des Simulators (4), jede virtuelle Unterrecheneinheit (13.1, 13.2, 13.3, 13.4, 13.5) als Block (18) dargestellt wird.

8. Verfahren (1) nach Anspruch 7, **dadurch gekennzeichnet, dass** die Blöcke (18) der virtuellen Unterrecheneinheiten (13.1, 13.2, 13.3, 13.4, 13.5), welche virtuellen Unterrecheneinheiten (13.1, 13.2, 13.3, 13.4, 13.5) als in Datenaustausch miteinander in Verbindung stehend erkannt worden sind, mit Datentransfer-Ports (19) an den entsprechenden Blöcken (18) gekennzeichnet werden, wobei der Datentransfer durch eine die Datentransfer-Ports (19) der virtuellen Unterrecheneinheiten (13.1, 13.2, 13.3, 13.4, 13.5) verbindende Signalleitung (20) gekennzeichnet wird.

9. System (4, 6, 7) zum Test wenigstens eines elektronischen Steuergeräts (2) als virtuelles Steuergerät (3) auf einem Simulator (4), wobei das System den Simulator (4) sowie eine Hardwarekonfiguration (6) und eine der Hardwarekonfiguration (6) zugeordnete Softwarekonfiguration (7) des elektronischen Steuergeräts (2) umfasst, wobei der Simulator (4) wenigstens eine Simulatorrecheneinheit (5) umfasst, wobei die Hardwarekonfiguration (6) des elektronischen Steuergeräts (2) wenigstens eine Recheneinheit (6a) und eine Externschnittstelle (6b) zum Austausch von Daten umfasst, wobei die Softwarekonfiguration (7) eine Internfunktionalität (7a) und eine Externschnittstellenfunktionalität (7b) umfasst, wobei durch den Simulator (4) das elektronische Steuergerät (2) auf das virtuelle Steuergerät (3) abgebildet wird, indem die Internfunktionalität (7a) der Softwarekonfiguration (7) des elektronischen Steuergeräts (2) als Internfunktionalität (8a) einer Softwarekonfiguration (8) des virtuellen Steuergeräts (3) übernommen wird und indem die Externschnittstellenfunktionalität (7b) des elektronischen Steuergerätes (2) ersetzt wird durch eine Datentransferfunktionalität (9a) einer Softwarekonfiguration (10) der Simulatorrecheneinheit (5), wobei die Softwarekonfiguration (8) des virtuellen Steuergeräts (3) in ausführbaren Code für die Simulatorrecheneinheit (5) übersetzt und im Betriebszustand des Simulators (4) auf dem Simulator (4) ausgeführt wird, **dadurch gekennzeichnet,**
**dass** die Hardwarekonfiguration (6) des elektronischen Steuergeräts (2) wenigstens eine erste Recheneinheit (6a1) und eine zweite Recheneinheit (6a2) unterschiedlicher Art aufweist, dass die Softwarekonfiguration (7) des elektronischen Steuergeräts (2) zumindest Internfunktionalitäten (7a1, 7a2) für die erste Recheneinheit (6a1) und die zweite Recheneinheit (6a2) umfasst, wobei zumindest die Internfunktionalität (7a1) der ersten Recheneinheit (6a1) eine Internfunktion (f_i) der Internfunktionalität (7a2) der zweiten Recheneinheit (6a2) aufruft (11),
**dass** der Simulator (4) eine Beschreibung (12) der Hardwarekonfiguration (6) und der Softwarekonfiguration (7) des elektronischen Steuergeräts (2) einschließlich der Zuordnung (13) der Internfunktionalitäten (7a1), (7a2) der Softwarekonfiguration (7) des elektronischen Steuergeräts (2) zu den Recheneinheiten (6a1), (6a2) des elektronischen Steuergeräts (2) und die Internfunktionalitäten (7a1, 7a2) der Recheneinheiten (6a1, 6a2) des elektronischen Steuergeräts (2) selbst erhält (15),
**dass** der Simulator (4) mittels Auswertung der Beschreibung (12) des elektronischen Steuergeräts (2) jede Recheneinheit (6a1, 6a2) jeder Art des elektronischen Steuergeräts (2) mit einer zugeordneten Internfunktionalität (7a1, 7a2) auf eine virtuelle Unterrecheneinheit (13.1, 13.2) entsprechender Art abbildet (16), wobei die Internfunktionalität (7a1, 7a2) des elektronischen Steuergeräts (2) der abgebildeten Recheneinheit (6a1, 6a2) in eine auf der Simulatorrecheneinheit (5) ausführbare Internfunktionalität (8a1, 8a2) der virtuellen Unterrecheneinheit (13.1, 13.2) übertragen wird und
**dass** der Simulator (4) mittels Auswertung (14) der bereitgestellten Internfunktionalitäten (7a1, 7a2) der ersten Recheneinheit (6a1) des elektronischen Steuergeräts (2) und der zweiten Recheneinheit (6a2) des elektronischen Steuergeräts (2) ermittelt, welche Recheneinheiten (6a1, 6a2) des elektronischen Steuergeräts (2) durch Zugriff auf eine Internfunktion (f_i) einer anderen Recheneinheit (6a1, 6a2) des elektronischen Steuergeräts (2) in Datenaustausch miteinander stehen und die Zugriffe (11) auf Internfunktionen (f_i) einer anderen Recheneinheit (6a1, 6a2) bei dem virtuellen Steuergerät (3) ersetz durch eine Datentransferfunktionalität (9b) der Softwarekonfiguration (10) der Simulatorrecheneinheit (5).

10. System (4, 6, 7) nach Anspruch 9, **dadurch gekennzeichnet, dass** die Simulatorrecheneinheit (5) des Simulators (4) mit einem Programm so programmiert ist, dass sie bei der Ausführung des Programms das Verfahren (1) nach einem der Ansprüche 2 bis 8 ausführt.

11. Simulator (4), entsprechend dem Simulator (4) des Systems (4, 6, 7) gemäß den Ansprüchen 9 oder 10, mit einer Simulatorrecheneinheit (5) zum Test eines elektronischen Steuergeräts (2) als virtuelles Steuergerät (3), wobei der Simulator (4) eine Datentransferfunktionalität (9a) und eine Softwarekonfiguration (10) der Simulatorrecheneinheit (5) aufweist, wobei die Simulatorrecheneinheit (5) mit einem Programm so programmiert ist, dass sie bei der Ausführung des Programms das Verfahren (1) nach einem der Ansprüche 1 bis 8 ausführt.

12. Computerprogramm, umfassend Befehle, die bei der Ausführung des Programms durch eine Simulatorrecheneinheit (5) eines Simulators (4) diese veranlassen, das Verfahren 1 nach einem der Ansprüche 1 bis 8 auszuführen.

## Claims

1. A method (1) for testing at least one electronic control device (2) as a virtual control device (3) on a simulator (4) having at least one simulator computing unit (5), the electronic control device (2) comprising a hardware configuration (6) having at least one computing unit (6a) and an external interface (6b) for exchanging data, and comprising a software configuration (7) associated with the hardware configuration (6), the software configuration (7) comprising an internal functionality (7a) and an external interface functionality (7b), the electronic control device (2) being mapped onto the virtual control device (3) by adopting the internal functionality (7a) of the software configuration (7) of the electronic control device (2) as the internal functionality (8a) of a software configuration (8) of the virtual control device (3) and by replacing the external interface functionality (7b) of the electronic control device (2) with a data transfer functionality (9a) of a software configuration (10) of the simulator computing unit (5), the software configuration (8) of the virtual control device (3) being translated into executable code for the simulator computing unit (5) and executed on the simulator (4),
**characterized in that**
the hardware configuration (6) of the electronic control device (2) comprises at least one first computing unit (6a1) and a second computing unit (6a2) of different types, and **in that** the software configuration (7) of the electronic control device (2) comprises at least internal functionalities (7a1, 7a2) for the first computing unit (6a1) and the second computing unit (6a2), wherein at least the internal functionality (7a1) of the first computing unit (6a1) invokes (11) an internal function (f_i) of the internal functionality (7a2) of the second computing unit (6a2),
and **in that** a description (12) of the hardware configuration (6) and the software configuration (7) of the electronic control device (2), including the association (13) of the internal functionalities (7a1), (7a2) of the software configuration (7) of the electronic control device (2) with the computing units (6a1), (6a2) of the electronic control device (2), and the internal functionalities (7a1, 7a2) of the computing units (6a1, 6a2) of the electronic control device (2) themselves are provided (15),
and **in that**, by evaluating the description (12) of the electronic control device (2), each computing unit (6a1, 6a2) of each type of electronic control device (2) having an associated internal functionality (7a1, 7a2) is mapped (16) onto a virtual sub-computing unit (13.1, 13.2) of a corresponding type, wherein the internal functionality (7a1, 7a2) of the electronic control device (2) of the mapped computing unit (6a1, 6a2) is converted into an internal functionality (8a1, 8a2) of the virtual sub-computing unit (13.1, 13.2) able to be executed on the simulator computing unit (5), and
**in that** the evaluation (14) of the provided internal functionalities (7a1, 7a2) of the first computing unit (6a1) of the electronic control device (2) and of the second computing unit (6a2) of the electronic control device (2) is used to determine which computing units (6a1, 6a2) of the electronic control device (2) are in data exchange with each other by accessing an internal function (f_i) of another computing unit (6a1, 6a2) of the electronic control device (2) and the accesses (11) to internal functions (f_i) of another computing unit (6a1, 6a2) at the virtual control device (3) are replaced by a data transfer functionality (9b) of the software configuration (10) of the simulator computing unit (5).

2. The method (1) according to claim 1, **characterized in that** different types of computing units (6a1, 6a2, 6a3) of the electronic control device (2) are: processors (CPU), microcontrollers (µC), graphics processors (GPU), programmable logic gates (FPGA), neural network accelerators (NNA), matrix accelerators (MACC), security chips.

3. The method (1) according to claim 1 or 2, **characterized in that** a plurality of computing units (6a) of identical type of the electronic control device (2) are mapped to exactly one virtual sub-computing unit (13) of this type, in particular all computing units (6a) of identical type of the electronic control device (2) are mapped to exactly one virtual sub-computing unit (13) of this type .

4. The method (1) according to any one of the claims 1 to 3, **characterized in that** the converting of the internal functionality (8a1, 8a2, 8a3) of the mapped computing unit (6a1, 6a2, 6a3) of the electronic control device (2) into an internal functionality (8a1, 8a2, 8a3) of the virtual sub-computing unit (13.1, 13.2, 13.3) executable on the simulator computing unit (5) comprises the use of a simulation module (17, 17.1, 17.2) executable on the simulator computing unit (5) for the mapped computing unit (6a1, 6a2, 6a3) of the electronic control device (2).

5. The method (1) according to any one of the claims 1 to 4, **characterized in that** the internal function (f_i) of the internal functionality (7a2) of the second computing unit (6a2) called by the internal functionality (7a1) of the first computing unit (6a1) relates to the loading or saving of data from or to the memory area of the second computing unit (6a2).

6. The method (1) according to any one of the claims 1 to 5, **characterized in that** the evaluating (14) of the provided internal functionalities (7a1, 7a2) of the first computing unit (6a1) and the second computing unit (6a2) of the electronic control device (2) is performed on the basis of the binary code of the internal functionalities (7a1, 7a2) executable on the electronic control device (2) and/or on the basis of the high-level source code of the internal functionalities (7a1, 7a2).

7. The method (1) according to any one of the claims 1 to 6, **characterized in that** for a computer-based graphical simulation environment (21), in particular of the simulator (4), each virtual sub-computing unit (13.1, 13.2, 13.3, 13.4, 13.5) is represented as a block (18).

8. The method (1) according to claim 7, **characterized in that** the blocks (18) of the virtual sub-computing units (13.1, 13.2, 13.3, 13.4, 13.5), said virtual sub-computing units (13.1, 13.2, 13.3, 13.4, 13.5) having been recognized as being connected to each other in data exchange, are identified by means of data transfer ports (19) on the corresponding blocks (18), wherein the data transfer is **characterized by** a signal line (20) connecting the data transfer ports (19) of the virtual sub-computing units (13.1, 13.2, 13.3, 13.4, 13.5).

9. A system (4, 6, 7) for testing at least one electronic control device (2) as a virtual control device (3) on a simulator (4), the system comprising the simulator (4) as well as a hardware configuration (6) and a software configuration (7) associated with the hardware configuration (6) of the electronic control device (2), the simulator (4) comprising at least one simulator computing unit (5), the hardware configuration (6) of the electronic control device (2) comprising at least one computing unit (6a) and an external interface (6b) for exchanging data, the software configuration (7) comprising an internal functionality (7a) and an external interface functionality (7b), the simulator (4) mapping the electronic control device (2) to the virtual control device (3) by the internal functionality (7a) of the software configuration (7) of the electronic control device (2) being adopted as the internal functionality (8a) of a software configuration (8) of the virtual control device (3) and by replacing the external interface functionality (7b) of the electronic control device (2) with a data transfer functionality (9a) of a software configuration (10) of the simulator computing unit (5), the software configuration (8) of the virtual control device (3) being converted into executable code for the simulator computing unit (5) and executed on the simulator (4) in the operating state of the simulator (4),
**characterized in that**
the hardware configuration (6) of the electronic control device (2) comprises at least one first computing unit (6a1) and a second computing unit (6a2) of different types, and **in that** the software configuration (7) of the electronic control device (2) comprises at least internal functionalities (7a1, 7a2) for the first computing unit (6a1) and the second computing unit (6a2), wherein at least the internal functionality (7a1) of the first computing unit (6a1) invokes (11) an internal function (f_i) of the internal functionality (7a2) of the second computing unit (6a2),
and **in that** the simulator (4) receives (15) a description (12) of the hardware configuration (6) and of the software configuration (7) of the electronic control device (2), including the association (13) of the internal functionalities (7a1), (7a2) of the software configuration (7) of the electronic control device (2) with the computing units (6a1), (6a2) of the electronic control device (2), and the internal functionalities (7a1, 7a2) of the computing units (6a1, 6a2) of the electronic control device (2) themselves,
and **in that** the simulator (4) maps (16) each computing unit (6a1, 6a2) of each type of the electronic control device (2) to an associated internal functionality (7a1, 7a2) on a virtual sub-computing unit (13.1, 13.2) of corresponding type by evaluating the description (12) of the electronic control device (2), wherein the internal functionality (7a1, 7a2) of the electronic control device (2) of the mapped computing unit (6a1, 6a2) is transcribed to an internal functionality (8a1, 8a2) of the virtual sub-computing unit (13.1, 13.2) executable on the simulator computing unit (5), and
**in that** the simulator (4) determines, by evaluating (14) the provided internal functionalities (7a1, 7a2) of the first computing unit (6a1) of the electronic control device (2) and of the second computing unit (6a2) of the electronic control device (2), which computing units (6a1, 6a2) of the electronic control device (2) are in data exchange with each other by accessing an internal function (f_i) of a different computing unit (6a1, 6a2) of the electronic control device (2) and the accesses (11) to internal functions (f_i) of another computing unit (6a1, 6a2) at the virtual control device (3) being replaced by a data transfer functionality (9b) of the software configuration (10) of the simulator computing unit (5).

10. The system (4, 6, 7) according to claim 9, **characterized in that** the simulator computing unit (5) of the simulator (4) is programmed by means of a program such that, when the program is executed, said computing unit performs the method (1) according to any one of the claims 2 to 8.

11. A simulator (4), corresponding to the simulator (4) of the system (4, 6, 7) according to claims 9 or 10, comprising a simulator computing unit (5) for testing an electronic control device (2) as a virtual control device (3), the simulator (4) comprising a data transfer functionality (9a) and a software configuration (10) of the simulator computing unit (5), the simulator computing unit (5) being programmed by means of a program such that said unit performs the method (1) according to any one of the claims 1 to 8 when the program is executed.

12. A computer program comprising commands causing a simulator computing unit (5) of a simulator (4) to perform the method 1 according to any one of the claims 1 to 8 when the program is executed by said unit.

## Revendications

1. Procédé (1) pour tester au moins un appareil de commande électronique (2), en tant qu'appareil de commande virtuel (3) sur un simulateur (4) comprenant au moins une unité de calcul (5) de simulateur, l'appareil de commande électronique (2) comportant une configuration matérielle (6) avec au moins une unité de calcul (6a) et une interface externe (6b) pour l'échange de données et une configuration logicielle (7) associée à la configuration matérielle (6), la configuration logicielle (7) comprenant une fonctionnalité interne (7a) et une fonctionnalité d'interface externe (7b), l'appareil de commande électronique (2) étant représenté sur l'appareil de commande virtuel (3) en ce sens que la fonctionnalité interne (7a) de la configuration logicielle (7) de l'appareil de commande électronique (2) est reprise comme fonctionnalité interne (8a) d'une configuration logicielle (8) de l'appareil de commande virtuel (3) et en ce sens que la fonctionnalité d'interface externe (7b) de l'appareil de commande électronique (2) est remplacée par une fonctionnalité de transfert de données (9a) d'une configuration logicielle (10) de l'unité de calcul (5) de simulateur, la configuration logicielle (8) de l'appareil de commande virtuel (3) étant traduite en code exécutable pour l'unité de calcul (5) de simulateur et exécutée sur le simulateur (4),
**caractérisé en ce que**
la configuration matérielle (6) de l'appareil de commande électronique (2) présente au moins une première unité de calcul (6a1) et une deuxième unité de calcul (6a2) de types différents, **en ce que** la configuration logicielle (7) de l'appareil de commande électronique (2) comprend au moins des fonctionnalités intérieures (7a1, 7a2) pour la première unité de calcul (6a1) et la deuxième unité de calcul (6a2), au moins la fonctionnalité interne (7a1) de la première unité de calcul (6a1) appelant (11) une fonction interne (f_i) de la fonctionnalité interne (7a2) de la deuxième unité de calcul (6a2),
qu'une description (12) de la configuration matérielle (6) et de la configuration logicielle (7) de l'appareil de commande électronique (2) est fournie (15), y compris l'affectation (13) des fonctionnalités internes (7a1), (7a2) de la configuration logicielle (7) de l'appareil de commande électronique (2) aux unités de calcul (6a1), (6a2) de l'appareil de commande électronique (2) et les fonctionnalités internes (7a1, 7a2) des unités de calcul (6a1, 6a2) de l'appareil de commande électronique (2) lui-même,
que, au moyen d'une évaluation de la description (12) de l'appareil de commande électronique (2), chaque unité de calcul (6a1, 6a2) de chaque type de l'appareil de commande électronique (2) avec une fonctionnalité interne (7al, 7a2) affectée est représentée sur une sous-unité de calcul virtuelle (13.1, 13.2) de type correspondant, la fonctionnalité interne (7a1, 7a2) de l'appareil de commande électronique (2) de l'unité de calcul représentée (6a1, 6a2) étant transformée en une fonctionnalité interne (8a1, 8a2) de la sous-unité de calcul virtuelle (13.1, 13.2) exécutable sur l'unité de calcul (5) de simulateur et
**en ce que**, au moyen d'une évaluation (14) des fonctionnalités internes (7a1, 7a2) mises à disposition de la première unité de calcul (6a1) de l'appareil de commande électronique (2) et de la deuxième unité de calcul (6a2) de l'appareil de commande électronique (2), il est déterminé quelles unités de calcul (6a1, 6a2) de l'appareil de commande électronique (2) sont en échange de données les unes avec les autres par accès à une fonction interne (f_i) d'une autre unité de calcul (6a1, 6a2) de l'appareil de commande électronique (2) et les accès (11) à des fonctions internes (f_i) d'une autre unité de calcul (6a1, 6a2) sont remplacés dans l'appareil de commande virtuel (3) par une fonctionnalité de transfert de données (9b) de la configuration logicielle (10) de l'unité de calcul (5) du simulateur.

2. Procédé (1) selon la revendication 1, **caractérisé en ce que** différents types d'unités de calcul (6a1, 6a2, 6a3) de l'appareil de commande électronique (2) sont utilisés : des processeurs (CPU), des microcontrôleurs (µC), des processeurs graphiques (GPU), des portes logiques programmables (FPGA), des accélérateurs de réseaux neuronaux (NNA), des accélérateurs matriciels (MACC), des puces de sécurité.

3. Procédé (1) selon la revendication 1 ou 2, **caractérisé en ce que** plusieurs unités de calcul (6a) de type identique de l'appareil de commande électronique (2) sont représentées sur exactement une sous-unité de calcul virtuelle (13) de ce type, en particulier toutes les unités de calcul (6a) de type identique de l'appareil de commande électronique (2) sont représentées sur exactement une sous-unité de calcul virtuelle (13) de ce type.

4. Procédé (1) selon l'une des revendications 1 à 3, **caractérisé en ce que** la traduction de la fonctionnalité interne (8a1, 8a2, 8a3) de l'unité de calcul (6a1, 6a2, 6a3) représentée de l'appareil de commande électronique (2) en une fonctionnalité interne (8a1, 8a2, 8a3) de la sous-unité de calcul virtuelle (13.1, 13.2, 13.3), exécutable sur l'unité de calcul (5) de simulateur comprend l'utilisation d'un module de simulation (17, 17.1, 17.2) exécutable sur l'unité de calcul (5) de simulateur pour l'unité de calcul (6a1, 6a2, 6a3) représentée de l'appareil de commande électronique (2).

5. Procédé (1) selon l'une des revendications 1 à 4, **caractérisé en ce que** la fonction interne (f_i) de la fonctionnalité interne (7a2) de la deuxième unité de calcul (6a2), appelée par la fonctionnalité interne (7a1) de la première unité de calcul (6a1), concerne le chargement ou l'enregistrement de données à partir ou vers la zone de mémoire de la deuxième unité de calcul (6a2).

6. Procédé (1) selon l'une des revendications 1 à 5, **caractérisé en ce que** l'évaluation (14) des fonctionnalités internes (7a1, 7a2) mises à disposition de la première unité de calcul (6a1) et de la deuxième unité de calcul (6a2) de l'appareil de commande électronique (2) s'effectue sur la base du code binaire des fonctionnalités internes (7a1, 7a2), exécutable sur l'appareil de commande électronique (2), et/ou sur la base du code source en langage évolué des fonctionnalités internes (7a1, 7a2).

7. Procédé (1) selon l'une des revendications 1 à 6, **caractérisé en ce que**, pour un environnement graphique de simulation (21) basé sur ordinateur, en particulier du simulateur (4), chaque sous-unité de calcul virtuelle (13.1, 13.2, 13.3, 13.4, 13.5) est représentée sous forme de bloc (18).

8. Procédé (1) selon la revendication 7, **caractérisé en ce que** les blocs (18) des sous-unités de calcul virtuelles (13.1, 13.2, 13.3, 13.4, 13.5), lesquelles sous-unités de calcul virtuelles (13.1, 13.2, 13.3, 13.4, 13.5) ont été identifiées comme étant en échange de données les unes avec les autres, sont **caractérisées par** des ports de transfert de données (19) sur les blocs (18) correspondants, le transfert de données étant **caractérisé par** une ligne de signaux (20) reliant les ports de transfert de données (19) des sous-unités de calcul virtuelles (13.1, 13.2, 13.3, 13.4, 13.5).

9. Système (4, 6, 7) pour tester au moins un appareil de commande électronique (2) en tant qu'appareil de commande virtuel (3) sur un simulateur (4), le système comprenant le simulateur (4) ainsi qu'une configuration matérielle (6) et une configuration logicielle (7) de l'appareil de commande électronique (2) associée à la configuration matérielle (6), le simulateur (4) comprenant au moins une unité de calcul (5) de simulateur, la configuration matérielle (6) de l'appareil de commande électronique (2) comprenant au moins une unité de calcul (6a) et une interface externe (6b) pour l'échange de données, la configuration logicielle (7) comprenant une fonctionnalité interne (7a) et une fonctionnalité d'interface externe (7b), l'appareil de commande électrique (2) étant représenté sur l'appareil de commande virtuel (3) par le simulateur (4) en ce sens que la fonctionnalité interne (7a) de la configuration logicielle (7) de l'appareil de commande électronique (2) est reprise en tant que fonctionnalité interne (8a) d'une configuration logicielle (8) de l'appareil de commande virtuelle (3) et en ce sens que la fonctionnalité d'interface externe (7b) de l'appareil de commande électronique (2) est remplacée par une fonctionnalité de transfert de données (9a) d'une configuration logicielle (10) de l'unité de calcul (5) du simulateur, la configuration logicielle (8) de l'appareil de commande virtuel (3) étant convertie en code exécutable pour l'unité de calcul (5) du simulateur (5) et exécuté dans l'état de fonctionnement du simulateur (4) sur le simulateur (4),
**caractérisé en ce**
la configuration matérielle (6) de l'appareil de commande électronique (2) présente au moins une première unité de calcul (6a1) et une deuxième unité de calcul (6a2) de types différents, en ce que la configuration logicielle (7) de l'appareil de commande électronique (2) comprend au moins des fonctionnalités intérieures (7a1, 7a2) pour la première unité de calcul (6a1) et la deuxième unité de calcul (6a2), au moins la fonctionnalité interne (7a1) de la première unité de calcul (6a1) appelant (11) une fonction interne (f_i) de la fonctionnalité interne (7a2) de la deuxième unité de calcul (6a2),
le simulateur (4) obtient une description (12) de la configuration matérielle (6) et de la configuration logicielle (7) de l'appareil de commande électronique (2), y compris l'affectation (13) des fonctionnalités internes (7a1), (7a2) de la configuration logicielle (7) de l'appareil de commande électronique (2) aux unités de calcul (6a1), (6a2) de l'appareil de commande électronique (2) et les fonctionnalités internes (7a1, 7a2) des unités de calcul (6a1, 6a2) de l'appareil de commande électronique (2) lui-même (15),
le simulateur (4) représente (16), au moyen de l'évaluation de la description (12) de l'appareil de commande électrique (2), chaque unité de calcul (6a1, 6a2) de chaque type de l'appareil de commande électronique (2) avec une fonctionnalité interne (7al, 7a2) affectée sur une sous-unité de calcul virtuelle (13.1, 13.2) de type correspondant, la fonctionnalité interne (7a1, 7a2) de l'appareil de commande électronique (2) de l'unité de calcul (6a1, 6a2) représentée étant convertie en une fonctionnalité interne (8a1, 8a2) de la sous-unité de calcul virtuelle (13.1, 13.2), exécutable sur l'unité de calcul (5) de simulateur et
en ce que le simulateur (4), au moyen d'une évaluation (14) des fonctionnalités internes (7a1, 7a2) fournies de la première unité de calcul (6a1) de l'appareil de commande électronique (2) et de la deuxième unité de calcul (6a2) de l'appareil de commande électronique (2), détermine quelles unités de calcul (6a1, 6a2) de l'appareil de commande électronique (2), par accès à une fonction interne (f_i) d'une autre unité de calcul (6a1, 6a2) de l'appareil de commande électronique (2) sont en échange de données les unes avec les autres, et remplace les accès (11) à des fonctions internes (f_i) d'une autre unité de calcul (6a1, 6a2) de l'appareil de commande virtuel (3) par une fonctionnalité de transfert de données (9b) de la configuration logicielle (10) de l'unité de calcul (5) du simulateur.

10. Système (4, 6, 7) selon la revendication 9, **caractérisé en ce que** l'unité de calcul (5) de simulateur du simulateur (4) est programmée avec un programme de sorte que, lors de l'exécution du programme, elle mette en œuvre le procédé (1) selon l'une des revendications 2 à 8.

11. Simulateur (4) correspondant au simulateur (4) du système (4, 6, 7) selon les revendications 9 ou 10, avec une unité de calcul (5) de simulateur pour tester un appareil de commande électronique (2) en tant qu'appareil de commande virtuel (3), le simulateur (4) présentant une fonctionnalité de transfert de données (9a) et une configuration logicielle (10) de l'unité de calcul (5) du simulateur, l'unité de calcul (5) du simulateur étant programmée avec un programme de sorte que, lors de l'exécution du programme, elle mette en œuvre le procédé (1) selon l'une des revendications 1 à 8**.**

12. Programme informatique, comprenant des instructions qui, lors de l'exécution du programme par une unité de calcul (5) de simulateur d'un simulateur (4), font en sorte que celui-ci mette en œuvre le procédé 1 selon l'une des revendications 1 à 8.
